# EUROPEAN PATENT APPLICATION

(11) **EP 4 443 967 A1**
(43) Date of publication of application: **09.10.2024**
(21) Application number: 24164314.7
(22) Date of filing: 18.03.2024
(51) Int. Cl.: H04W 36/00, H04W 36/36

(54) **APPARATUS, METHOD AND COMPUTER PROGRAM**

(30) Priority: 06.04.2023 IN 202341026097
(71) Applicant: Nokia Technologies Oy, 02610 Espoo (FI)
(72) Inventor: AWADA, Ahmad, 81249 Munich (DE); KARABULUT, Umur, 81379 Munich (DE); CHATTERJEE, Aritra, 700061 Kolkata (IN); GÜRSU, Halit Murat, 81249 Munchen (DE); SELVAGANAPATHY, Srinivasan, 560045 Bangalore (IN); RATOVELOMANANA, Frédéric, 75018 Paris (FR)
(74) Representative: Bryers Intellectual Property Ltd

(57) **Abstract**

There is provided an apparatus comprising: means for generating an identifier for a user equipment, wherein the identifier provides a mapping between a measurement configuration in a source configuration of the user equipment and a configuration of a conditional primary secondary cell change to be executed by the user equipment at a target configuration; and means for sending the identifier, the measurement configuration, and the configuration of the conditional primary secondary cell change to the user equipment.

## Description

### FIELD

The present application relates to a method, apparatus, and computer program. In particular, but not exclusively, the present application relates to conditional handover.

### BACKGROUND

A communication system can be seen as a facility that enables communication sessions between two or more entities such as user terminals, base stations and/or other nodes by providing carriers between the various entities involved in the communications path. A communication system can be provided for example by means of a communication network and one or more compatible communication devices. The communication sessions may comprise, for example, communication of data for carrying communications such as voice, video, electronic mail (email), text message, multimedia and/or content data and so on. Non-limiting examples of services provided comprise two-way or multi-way calls, data communication or multimedia services and access to a data network system, such as the Internet. In a wireless communication system at least a part of a communication session between at least two stations occurs over a wireless link. Examples of wireless systems comprise public land mobile networks (PLMN), satellite based communication systems and different wireless local networks, for example wireless local area networks (WLAN). Some wireless systems can be divided into cells, and are therefore often referred to as cellular systems.

A user can access the communication system by means of an appropriate communication device or terminal. A communication device of a user may be referred to as user equipment (UE) or user device.

The communication system and associated devices typically operate in accordance with a given standard or specification which sets out what the various entities associated with the system are permitted to do and how that should be achieved. Communication protocols and/or parameters which shall be used for the connection are also typically defined. One example of a communications system is UTRAN (3G radio). Other examples of communication systems are the long-term evolution (LTE) of the Universal Mobile Telecommunications System (UMTS) radio-access technology and so-called 5G or New Radio (NR) networks. NR is being standardized by the 3rd Generation Partnership Project (3GPP). Other examples of communication systems include 5G-Advanced (NR Rel-18 and beyond) and 6G.

A feature of modern communication systems is conditional Handover (CHO) in Multi-RAT Dual Connectivity (MR-DC). Dual connectivity is a feature that enables a UE to connect to two base stations simultaneously. These two base stations may be referred to as a Master Node (MN) and Secondary Node (SN).

### SUMMARY

According to a first aspect there is disclosed an apparatus comprising: means for generating an identifier for a user equipment, wherein the identifier provides a mapping between a measurement configuration in a source configuration of the user equipment and a configuration of a conditional primary secondary cell change to be executed by the user equipment at a target configuration; and means for sending the identifier, the measurement configuration, and the configuration of the conditional primary secondary cell change to the user equipment.

According to some examples, the measurement configuration in the source configuration comprises a measurement object, a measurement identifier, and a report configuration.

According to some examples, the means for generating are configured to generate a further identifier that provides a mapping between a further measurement configuration in the source configuration of the user equipment and a further configuration of a further conditional primary secondary cell change, wherein the configuration of the conditional primary secondary cell change and the further configuration of the further conditional primary secondary cell change are conditional to execution of a conditional handover of a primary cell.

According to some examples, the apparatus further comprises means for receiving information for the configuration of a conditional primary secondary cell change from a target master node, wherein the means for generating are configured to generate the configuration of the conditional primary secondary cell change and the identifier on the basis of the received information.

According to some examples, the information of the measurement configuration is received from the target node outside of a radio resource control configuration message.

According to some examples, the apparatus comprises a source master node.

According to a second aspect there is disclosed an apparatus comprising at least one processor and at least one memory storing instructions that, when executed by the at least one processor, cause the apparatus at least to: generate an identifier for a user equipment, wherein the identifier provides a mapping between a measurement configuration in a source configuration of the user equipment and a configuration of a conditional primary secondary cell change to be executed by the user equipment at a target configuration; and send the identifier, the measurement configuration, and the configuration of the conditional primary secondary cell change to the user equipment.

According to a third aspect there is provided an apparatus comprising: circuitry for generating an identifier for a user equipment, wherein the identifier provides a mapping between a measurement configuration in a source configuration of the user equipment and a configuration of a conditional primary secondary cell change to be executed by the user equipment at a target configuration; and sending the identifier, the measurement configuration, and the configuration of the conditional primary secondary cell change to the user equipment.

According to a fourth aspect there is provided a method performed by an apparatus, the method comprising: generating an identifier for a user equipment, wherein the identifier provides a mapping between a measurement configuration in a source configuration of the user equipment and a configuration of a conditional primary secondary cell change to be executed by the user equipment at a target configuration; and sending the identifier, the measurement configuration, and the configuration of the conditional primary secondary cell change to the user equipment.

According to some examples, the measurement configuration in the source configuration comprises a measurement object, a measurement identifier, and a report configuration.

According to some examples, the method comprises generating a further identifier that provides a mapping between a further measurement configuration in the source configuration of the user equipment and a further configuration of a further conditional primary secondary cell change, wherein the configuration of the conditional primary secondary cell change and the further configuration of the further conditional primary secondary cell change are conditional to execution of a conditional handover of a primary cell.

According to some examples, the method further comprises receiving information for the configuration of a conditional primary secondary cell change from a target master node, wherein generating the configuration of the conditional primary secondary cell change and the identifier is on the basis of the received information.

According to some examples, the information of the measurement configuration is received from the target node outside of a radio resource control configuration message.

According to some examples, the apparatus comprises a source master node.

According to a fifth aspect there is provided a computer readable medium comprising instructions which, when executed by an apparatus, cause the apparatus to perform at least the following: generating an identifier for a user equipment, wherein the identifier provides a mapping between a measurement configuration in a source configuration of the user equipment and a configuration of a conditional primary secondary cell change to be executed by the user equipment at a target configuration; and sending the identifier, the measurement configuration, and the configuration of the conditional primary secondary cell change to the user equipment.

According to a sixth aspect, there is provided a non-transitory computer readable medium comprising program instructions that, when executed by an apparatus, cause the apparatus to perform at least the following: generating an identifier for a user equipment, wherein the identifier provides a mapping between a measurement configuration in a source configuration of the user equipment and a configuration of a conditional primary secondary cell change to be executed by the user equipment at a target configuration; and sending the identifier, the measurement configuration, and the configuration of the conditional primary secondary cell change to the user equipment.

According to a seventh aspect there is disclosed an apparatus comprising: means for receiving an identifier, wherein the identifier provides a mapping between a measurement configuration in a source configuration of the apparatus and a configuration of a conditional primary secondary cell change to be executed by the apparatus at a target configuration; means for using the identifier to determine one or more conditions of the conditional primary secondary cell change; means for performing one or more cell measurements; and means for, when the one or more conditions of the conditional primary secondary cell change are met, executing the secondary cell change.

According to some examples, the measurement configuration in the source configuration comprises a measurement object, a measurement identifier, and a report configuration.

According to some examples, the measurement configuration in the source configuration is related to at least one Conditional PSCell addition and/or change.

According to some examples, the apparatus is further configured to use the mapping in the source configuration to determine which target PSCell condition to decode for execution.

According to some examples, the mapping associates a conditional configuration ID in the source configuration and conditional configuration ID in the target configuration.

According to some examples, the mapping associates a measurement ID in the source configuration with a measurement ID in the target configuration.

According to some examples, the apparatus is further configured to postpone decoding of the configuration of the conditional primary secondary cell change until the conditional primary secondary cell change is executed.

According to some examples, the apparatus comprises a user equipment.

According to an eighth aspect there is disclosed an apparatus comprising at least one processor and at least one memory storing instructions that, when executed by the at least one processor, cause the apparatus at least to: receive an identifier, wherein the identifier provides a mapping between a measurement configuration in a source configuration of the apparatus and a configuration of a conditional primary secondary cell change to be executed by the apparatus at a target configuration; use the identifier to determine one or more conditions of the conditional primary secondary cell change; perform one or more cell measurements; when the one or more conditions of the conditional primary secondary cell change are met, execute the secondary cell change.

According to a ninth aspect there is provided an apparatus comprising: circuitry for receiving an identifier, wherein the identifier provides a mapping between a measurement configuration in a source configuration of the apparatus and a configuration of a conditional primary secondary cell change to be executed by the apparatus at a target configuration; using the identifier to determine one or more conditions of the conditional primary secondary cell change; performing one or more cell measurements; when the one or more conditions of the conditional primary secondary cell change are met, executing the secondary cell change.

According to a tenth aspect there is provided a method performed by an apparatus, the method comprising: receiving an identifier, wherein the identifier provides a mapping between a measurement configuration in a source configuration of the apparatus and a configuration of a conditional primary secondary cell change to be executed by the apparatus at a target configuration; using the identifier to determine one or more conditions of the conditional primary secondary cell change; performing one or more cell measurements; when the one or more conditions of the conditional primary secondary cell change are met, executing the secondary cell change.

According to some examples, the measurement configuration in the source configuration comprises a measurement object, a measurement identifier, and a report configuration.

According to some examples, the measurement configuration in the source configuration is related to at least one Conditional PSCell addition and/or change.

According to some examples, the method further comprises using the mapping in the source configuration to determine which target PSCell condition to decode for execution.

According to some examples, the mapping associates a conditional configuration ID in the source configuration and conditional configuration ID in the target configuration.

According to some examples the mapping associates a measurement ID in the source configuration with a measurement ID in the target configuration.

According to some examples, the method further comprises postponing decoding of the configuration of the conditional primary secondary cell change until the conditional primary secondary cell change is executed.

According to some examples, the apparatus comprises a user equipment.

According to an eleventh aspect there is provided a computer readable medium comprising instructions which, when executed by an apparatus, cause the apparatus to perform at least the following: receiving an identifier, wherein the identifier provides a mapping between a measurement configuration in a source configuration of the apparatus and a configuration of a conditional primary secondary cell change to be executed by the apparatus at a target configuration; using the identifier to determine one or more conditions of the conditional primary secondary cell change; performing one or more cell measurements; when the one or more conditions of the conditional primary secondary cell change are met, executing the secondary cell change.

According to a twelfth aspect, there is provided a non-transitory computer readable medium comprising program instructions that, when executed by an apparatus, cause the apparatus to perform at least the following: receiving an identifier, wherein the identifier provides a mapping between a measurement configuration in a source configuration of the apparatus and a configuration of a conditional primary secondary cell change to be executed by the apparatus at a target configuration; using the identifier to determine one or more conditions of the conditional primary secondary cell change; performing one or more cell measurements; when the one or more conditions of the conditional primary secondary cell change are met, executing the secondary cell change.

According to a thirteenth aspect there is disclosed an apparatus comprising: means for generating a nested conditional handover configuration for conditional handover of a user equipment to a target cell; and means for sending the conditional handover configuration to a node, wherein one or more target conditional configuration identifiers are provided outside of the nested conditional handover configuration.

According to some examples, the apparatus further comprises means for sending an indication of conditional PSCell additions that correspond to the one or more target conditional configuration identifiers.

According to some examples, the node comprises a source master node.

According to some examples, the apparatus comprises a target master node.

According to a fourteenth aspect there is disclosed an apparatus comprising at least one processor and at least one memory storing instructions that, when executed by the at least one processor, cause the apparatus at least to: generate a nested conditional handover configuration for conditional handover of a user equipment to a target cell; and send the conditional handover configuration to a node, wherein one or more target conditional configuration identifiers are provided outside of the nested conditional handover configuration.

According to a fifteenth aspect there is provided an apparatus comprising: circuitry for generating a nested conditional handover configuration for conditional handover of a user equipment to a target cell; sending the conditional handover configuration to a node, wherein one or more target conditional configuration identifiers are provided outside of the nested conditional handover configuration.

According to a sixteenth aspect there is provided a method performed by an apparatus, the method comprising: generating a nested conditional handover configuration for conditional handover of a user equipment to a target cell; and sending the conditional handover configuration to a node, wherein one or more target conditional configuration identifiers are provided outside of the nested conditional handover configuration.

According to some examples, the method further comprises sending an indication of conditional PSCell additions that correspond to the one or more target conditional configuration identifiers.

According to some examples, the node comprises a source master node.

According to some examples, the apparatus comprises a target master node.

According to a seventeenth aspect there is provided a computer readable medium comprising instructions which, when executed by an apparatus, cause the apparatus to perform at least the following: generating a nested conditional handover configuration for conditional handover of a user equipment to a target cell; and sending the conditional handover configuration to a node, wherein one or more target conditional configuration identifiers are provided outside of the nested conditional handover configuration.

According to an eighteenth aspect, there is provided a non-transitory computer readable medium comprising program instructions that, when executed by an apparatus, cause the apparatus to perform at least the following: generating a nested conditional handover configuration for conditional handover of a user equipment to a target cell; and sending the conditional handover configuration to a node, wherein one or more target conditional configuration identifiers are provided outside of the nested conditional handover configuration.

According to a nineteenth aspect there is disclosed an apparatus comprising: means for generating an indicator for indicating a behaviour for a user equipment to adopt when a conditional handover condition is met for a primary cell, PCell, wherein the behaviour comprises the user equipment monitoring for a primary secondary cell, PSCell, which satisfies a conditional PSCell addition or change condition; and means for sending the indicator to the user equipment in the form of an information element or a flag.

According to some examples, the behaviour comprises triggering the monitoring only after the conditional handover condition is met.

According to some examples, the behaviour comprises executing PSCell change only after the conditional handover condition is met.

According to some examples, the apparatus comprises a source master node.

According to a twentieth aspect there is disclosed an apparatus comprising at least one processor and at least one memory storing instructions that, when executed by the at least one processor, cause the apparatus at least to: generate an indicator for indicating a behaviour for a user equipment to adopt when a conditional handover condition is met for a primary cell, PCell, wherein the behaviour comprises the user equipment monitoring for a primary secondary cell, PSCell, which satisfies a conditional PSCell addition or change condition; and send the indicator to the user equipment in the form of an information element or a flag.

According to a twenty first aspect there is provided an apparatus comprising: circuitry for generating an indicator for indicating a behaviour for a user equipment to adopt when a conditional handover condition is met for a primary cell, PCell, wherein the behaviour comprises the user equipment monitoring for a primary secondary cell, PSCell, which satisfies a conditional PSCell addition or change condition; and sending the indicator to the user equipment in the form of an information element or a flag.

According to a twenty second aspect there is provided a method performed by an apparatus, the method comprising: generating an indicator for indicating a behaviour for a user equipment to adopt when a conditional handover condition is met for a primary cell, PCell, wherein the behaviour comprises the user equipment monitoring for a primary secondary cell, PSCell, which satisfies a conditional PSCell addition or change condition; and sending the indicator to the user equipment in the form of an information element or a flag.

According to some examples, the behaviour comprises triggering the monitoring only after the conditional handover condition is met.

According to some examples, the behaviour comprises executing PSCell change only after the conditional handover condition is met.

According to some examples, the apparatus comprises a source master node.

According to a twenty third aspect there is provided a computer readable medium comprising instructions which, when executed by an apparatus, cause the apparatus to perform at least the following: generating an indicator for indicating a behaviour for a user equipment to adopt when a conditional handover condition is met for a primary cell, PCell, wherein the behaviour comprises the user equipment monitoring for a primary secondary cell, PSCell, which satisfies a conditional PSCell addition or change condition; and sending the indicator to the user equipment in the form of an information element or a flag.

According to a twenty fourth aspect, there is provided a non-transitory computer readable medium comprising program instructions that, when executed by an apparatus, cause the apparatus to perform at least the following: generating an indicator for indicating a behaviour for a user equipment to adopt when a conditional handover condition is met for a primary cell, PCell, wherein the behaviour comprises the user equipment monitoring for a primary secondary cell, PSCell, which satisfies a conditional PSCell addition or change condition; and sending the indicator to the user equipment in the form of an information element or a flag.

According to a twenty fifth aspect there is disclosed an apparatus comprising: means for receiving an indicator for indicating a behaviour for the apparatus to adopt when a conditional handover condition is met for a primary cell, PCell, wherein the behaviour comprises the apparatus monitoring for a primary secondary cell, PSCell, which satisfies a conditional PSCell condition, wherein the indicator is in the form of an information element or a flag; and means for adopting the behaviour when the conditional handover condition is met.

According to some examples, the behaviour comprises triggering the monitoring only after the conditional handover condition is met.

According to some examples, the behaviour comprises executing PSCell change only after the conditional handover condition is met.

According to some examples, the behaviour comprises executing the PSCell change and the conditional handover of the PCell substantially at the same time.

According to some examples, the apparatus comprises a user equipment.

According to a twenty sixth aspect there is disclosed an apparatus comprising at least one processor and at least one memory storing instructions that, when executed by the at least one processor, cause the apparatus at least to: receive an indicator for indicating a behaviour for the apparatus to adopt when a conditional handover condition is met for a primary cell, PCell, wherein the behaviour comprises the apparatus monitoring for a primary secondary cell, PSCell, which satisfies a conditional PSCell condition, wherein the indicator is in the form of an information element or a flag; and adopt the behaviour when the conditional handover condition is met.

According to a twenty seventh aspect there is provided an apparatus comprising: circuitry for receiving an indicator for indicating a behaviour for the apparatus to adopt when a conditional handover condition is met for a primary cell, PCell, wherein the behaviour comprises the apparatus monitoring for a primary secondary cell, PSCell, which satisfies a conditional PSCell condition, wherein the indicator is in the form of an information element or a flag; and adopting the behaviour when the conditional handover condition is met.

According to a twenty eighth aspect there is provided a method performed by an apparatus, the method comprising: receiving an indicator for indicating a behaviour for the apparatus to adopt when a conditional handover condition is met for a primary cell, PCell, wherein the behaviour comprises the apparatus monitoring for a primary secondary cell, PSCell, which satisfies a conditional PSCell condition, wherein the indicator is in the form of an information element or a flag; and adopting the behaviour when the conditional handover condition is met.

According to some examples, the behaviour comprises triggering the monitoring only after the conditional handover condition is met.

According to some examples, the behaviour comprises executing PSCell change only after the conditional handover condition is met.

According to some examples, the behaviour comprises executing the PSCell change and the conditional handover of the PCell substantially at the same time.

According to some examples, the apparatus comprises a user equipment.

According to a twenty ninth aspect there is provided a computer readable medium comprising instructions which, when executed by an apparatus, cause the apparatus to perform at least the following: receiving an indicator for indicating a behaviour for the apparatus to adopt when a conditional handover condition is met for a primary cell, PCell, wherein the behaviour comprises the apparatus monitoring for a primary secondary cell, PSCell, which satisfies a conditional PSCell condition, wherein the indicator is in the form of an information element or a flag; and adopting the behaviour when the conditional handover condition is met.

According to a thirtieth aspect, there is provided a non-transitory computer readable medium comprising program instructions that, when executed by an apparatus, cause the apparatus to perform at least the following: receiving an indicator for indicating a behaviour for the apparatus to adopt when a conditional handover condition is met for a primary cell, PCell, wherein the behaviour comprises the apparatus monitoring for a primary secondary cell, PSCell, which satisfies a conditional PSCell condition, wherein the indicator is in the form of an information element or a flag; and adopting the behaviour when the conditional handover condition is met.

### DESCRIPTION OF FIGURES

Embodiments will now be described, by way of example only, with reference to the accompanying Figures in which:
Figure 1 shows a representation of a network system according to some example embodiments;
Figure 2 shows a schematic representation a wireless communication system with dual connectivity;
Figure 3 schematically shows a conditional handover scenario;
Figure 4 is a signalling diagram according to an example;
Figure 5 schematically shows an example mapping between configurations;
Figure 6 schematically shows an example mapping between configurations;
Figure 7 shows a schematic representation of a control apparatus according to some example embodiments;
Figure 8 shows a schematic representation of an apparatus according to some example embodiments;
Figures 9 to 13 schematically show some flow charts according to examples;
Figure 14 shows a schematic representation of a non-volatile memory medium storing instructions which when executed by a processor allow a processor to perform one or more of the steps of the methods of some embodiments.

### DETAILED DESCRIPTION

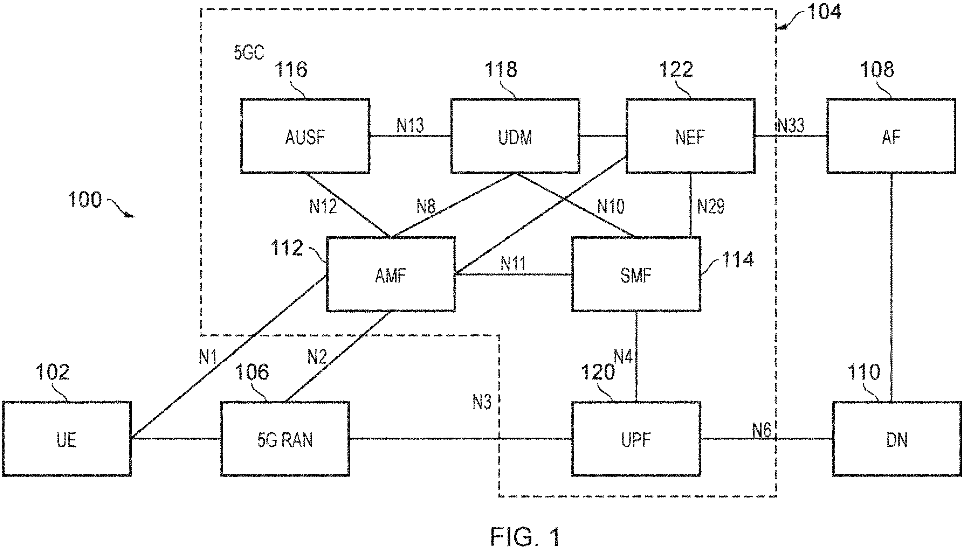

In the following, certain embodiments are explained with reference to mobile communication devices capable of communication via a wireless cellular system and mobile communication systems serving such mobile communication devices. Before explaining in detail the exemplifying embodiments, certain general principles of a wireless communication system, access systems thereof, and mobile communication devices are briefly explained with reference to Figure 1 to assist in understanding the technology underlying the described examples.

Figure 1 shows a schematic representation of a wireless communication system 100. The wireless communication system 100 may comprise one more devices 102 such as user equipments (UEs), or terminals. The wireless communication system 100 may also comprise a 5G system (5GS), as shown in Figure. The 5GS comprises a 5G radio access network (5G-RAN) 106, a 5G core network (5GC) 104 comprising one or more network functions (NF), one or more application functions (AFs) 108, and one or more data networks (DNs) 110.

The 5G-RAN 106 may comprise one or more gNodeB (gNB) distributed unit (DU) functions connected to one or more gNodeB (gNB) centralized unit (CU) functions.

The 5GC 104 may comprise an access management function (AMF) 112, a session management function (SMF) 114, an authentication server function (AUSF) 116, a user data management (UDM) 118, a user plane function (UPF) 120, a network exposure function (NEF) 122 and/or other NFs. Some of the examples as shown below may be applicable to 3GPP 5G standards. However, some examples may also be applicable to 5G-advanced, 4G, 3G and other 3GPP standards.

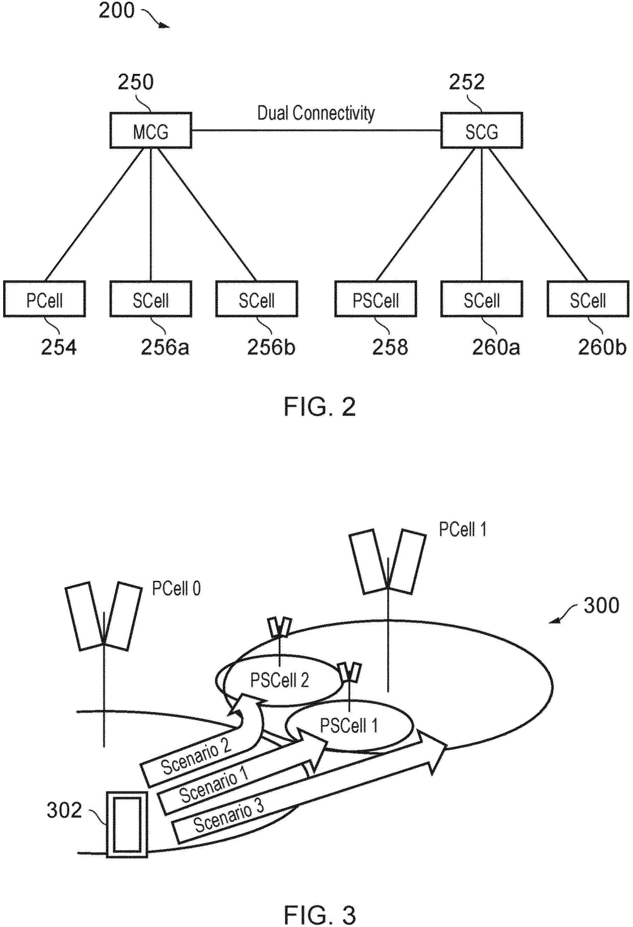

Figure 2 shows a schematic representation of a wireless communication system with dual connectivity. There is provided a system 200 in which some examples may be performed. System 200 comprises Master Cell Group (MCG) 250 and a Secondary Cell Group (SCG) 252. System 200 may also comprise other SCGs, each having a primary SCG cell (PSCell). Each of the of other SCGs may also have one or more secondary cells (SCells).

MCG 250 comprises a Primary Cell (PCell) 254. PCell 254 may be used to initiate initial access for a UE. MCG 250 may also comprise other cells comprising at least one Secondary Cell (SCell) 256a and 256b.

MCG 250 may be controlled by a Master Node (MN).

MCG 250 is connected to SCG 252 by a Dual Connectivity (DC) system. SCG 252 comprises a Primary Secondary Cell (PSCell) 258 which may be used as a cell for which initial access is initiated for SCG 252. SCG 252 may also comprise other cells comprising at least one Secondary Cell (SCell) 260a and 260b.

SCG 252 may be controlled by a Secondary Node (SN). Each SCG in system 200 may comprise a SN.

A UE can be in dual connectivity with a MN (wherein the MN may comprise a PCell) and a SN (wherein the SN may comprise a PSCell). Therefore, a UE in dual connectivity with a MN and SN may be configured with a corresponding PCell and PSCell. The MN or SN can initiate a Conditional Primary Secondary Cell Change (CPC) procedure.

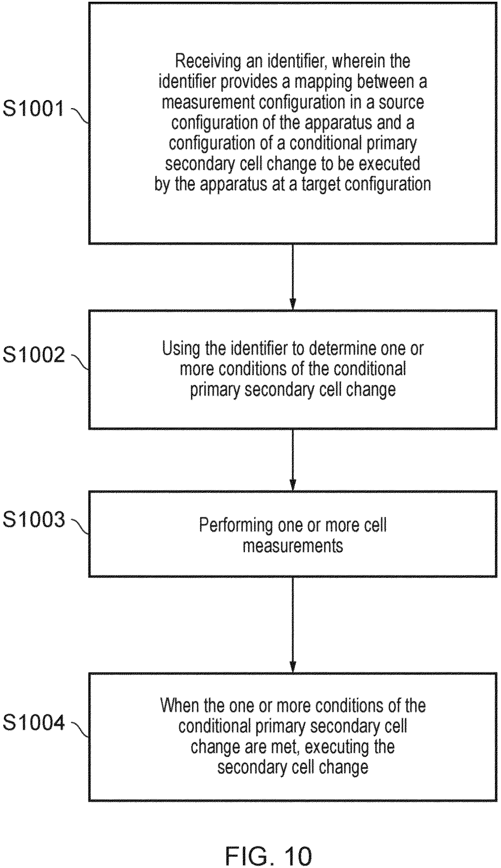

3GPP TS 37.340 describes a Conditional Handover (CHO) with a Secondary Node (SN). For background, reference is made to section 10.19 and Figure 10.19.2-1 of TS 37.340, and step 1 to step 11 (the remaining steps are for performing the UPF user plane switch from the old serving MN to new target MN).

3GPP Release 17 describes a target Master Node (MN) which when receiving a handover request for a target Primary Cell (PCell) from the source MN can prepare only one target Primary Cell of Secondary Cell Group (PSCell). When the CHO execution condition is met for a particular target PCell, the UE may perform random access to the target PSCell and corresponding configured target PSCell, if configured by target MN. In 3GPP Release 18, CHO is further enhanced where the target MN can prepare more than one target PSCell, in the same or different SN for the same target PCell.

TS 38.331 describes conditional reconfiguration. In particular, section 5.3.5.13.4 describes conditional reconfiguration evaluation and says that the UE shall (inter alia):
2> if event(s) associated to all measld(s) within condTriggerConfig for a target candidate cell within the stored condRRCReconfig are fulfilled:
   3> consider the target candidate cell within the stored condRRCReconfig, associated to that condReconfigld, as a triggered cell;
2>initiate the conditional reconfiguration execution, as specified in 5.3.5.13.5;

The present application notes that there may be one or more problems associated with evaluation of conditional configurations (e.g. for a CHO).

A conditional configuration may take the following form:
CondConfToAddModList
- CondReconfID 1
- CondExecutionCond-r16: Meas ID1
- condRRCReconf: MCG reconf + SCG configuration for PSCell 1

In some examples, the conditional configuration to add mod list comprises three elements. These three elements are: conditional configuration ID, a unique identifier used to relate a meas ID with a conditional RRC configuration. Meas ID, associates a measurement object and a reporting configuration. The reporting configuration indicates the parameters of the measurement event that is evaluated and used for triggering the execution of the conditional reconfiguration whereas the measurement object defines, among other parameters, the frequency for measurement. If CHO condition (e.g. Meas ID1 in the example above) is met for PCell X, the UE checks if it has a CHO configuration for PCell X by decoding the Physicall Cell Identify (PCI) of the prepared cell in "condRRCReconfig" and "MCG config".

The three elements may define UE behavior about how the conditional configurations are evaluated and executed.

Typically, the CondConftoAddModList is prepared by the RAN node that configures the UE, such as source MN in CHO. Source MN assigns the Conditional configuration ID and determines the measurement id and includes the RRCReconfiguration (conditional configurations) provided by the target MN.

Figure 3 schematically shows a Rel. 18 scenario 300 for a UE 302 that is in dual connectivity (DC) and CHO scenario.

In Rel. 18, the Mobility enhancement work item is working on CHO with multiple target SCG configurations.

In order to do these, there are two candidate configurations to be provided to the UE 302.

### "Preparation approach 1":

There is a separate CHO - NR-DC configuration (like in Rel. 17) configured for each target PSCell, with the same target PCell.
Scenario 1 - CHO 1: Target PCell 1 and target PSCell 1
Scenario 2 - CHO 2: Target PCell 1 and target PSCell 2
Scenario 3 - CHO 3: Target PCell 1

### "Preparation approach 2":

There is one CHO configuration for one target PCell. Target PSCell configurations are indicated as nested CPAC configurations inside the CHO configuration.
CHO 1: Target PCell 1 ( Scenario 3)
Inside CHO 1 - CPA 1: Target PSCell 1 ( Scenario 1)
Inside CHO 1 - CPA 2: Target PScell 2 (Scenario 2)

So in "approach 2", initially, UE will execute PCell configuration and will execute the CPA on top of that.

In "approach 1", UE will, from scratch, execute one of the three configurations matching the scenario.

The present disclosure deals primarily with "approach 2".

RAN2 has agreed to support simultaneous evaluation of CHO and CPC in Rel-18. Furthermore, it has been agreed that the UE should not have to unpack any information contained in nested configuration containers in order to perform measurements. However, the present disclosure has identified that it is unclear how a UE would know which CPA configuration to execute without performing the unpacking.

It has also been agreed in RAN2 that the UE doesn't execute CPC/CPA unless CHO condition is fulfilled (regardless of parallel or sequential evaluation). This agreement dictates that the fulfilment of the CPA or target PSCell access condition should not lead to execution of the conditional configuration. The to be executed conditional configuration can be indicated as a plain SN RRCReconfiguration inside target configuration or it can be indicated as a conditional configuration inside the target configuration. The present disclosure identifies that in either case, the UE should not execute the conditional configuration after the triggering of execution condition which is against the UE behaviour described above . The present disclosure also identifies there is no such reporting configuration to trigger this behaviour where UE waits for another condition before the execution.

The present disclosure proposes two examples for dealing with these issues, and to enable evaluation of the conditions for the target PSCell configurations inside target PCell configuration without decoding of the nested configurations at the source PSCell prior to CHO execution. These are described in-turn below as "Option 1" and "Option 2".

### Option 1

Option 1 enables evaluation of the nested SCG configuration (e.g. nested CPAC configurations inside the CHO configuration) at UE. In some examples, this is done by configuring the UE to make the same measurements which the UE used for CPA evaluation as part of source configuration. These measurement evaluations can be linked to the CPA configurations via an identifier. The identifier may be considered a unique identifier, in some examples. In some examples, by unique is meant that a value of the identifier corresponds to or is in relation to a certain CPA configuration. Therefore a different value for the identifier will correspond to a different CPA configuration. In some examples, the unique identifier can be viewed as a 'mirror measurement-ID' that includes the corresponding measurement-object and Report-configuration parameters of nested CPA configuration. In some examples the unique identifier, or mirror measurement ID, indicates a dummy (different) ID with same reporting and measurement object.

The unique identifier can be used to indicate the SCG configuration that is to be executed or is a candidate to be executed related to the measurements UE has received.

In other words, it may be considered that Option 1 enables evaluation of a nested SCG configuration, for example by sending to the UE a list of parameters along with the unique identifier. For example, the list of parameters may comprise MeasObject, MeasID and related ReportConfig. Therefore, in some examples it may be considered that the list of identifiers comprises a tuple. Therefore, in some examples the unique identifier maps to a unique combination of the tuple (MeasObject, MeasID and related ReportConfig). In other words, in some examples it may be considered that a value of the unique identifier corresponds to respective values of the parameters of the tuple. Therefore, according to some examples, the UE would be able to determine values for measobject, measid and reportconfig from a single value of the unique identifier. In some examples, the unique identifier comprises a numerical value.

In examples the unique identifier can be used to indicate to the UE the SCG configuration that is to be executed or is a candidate to be executed related to the measurements UE has received.

It may be considered in some examples that Option 1 provides a conditional configuration ID mapping (CondConfID mapping) and a list of target PSCells for the UE. By way of further explanation, it may be considered that there are two condConfIDs that are mapped to each other:
(i) one condConfID is at the source configuration
(ii) other condConfld is at the target configuration

The target RAN node determines the condConfID inside target configuration. The source RAN node determines the condConfID inside the source configuration. In some examples, the source provides the mapping of the two to the UE. Then, the target PSCell configuration to be executed is inside target configuration. In the source configuration there is no target PSCell configuration to execute. For this reason, and as a result of the mapping, the UE executes the target PSCell configuration inside the target configuration.

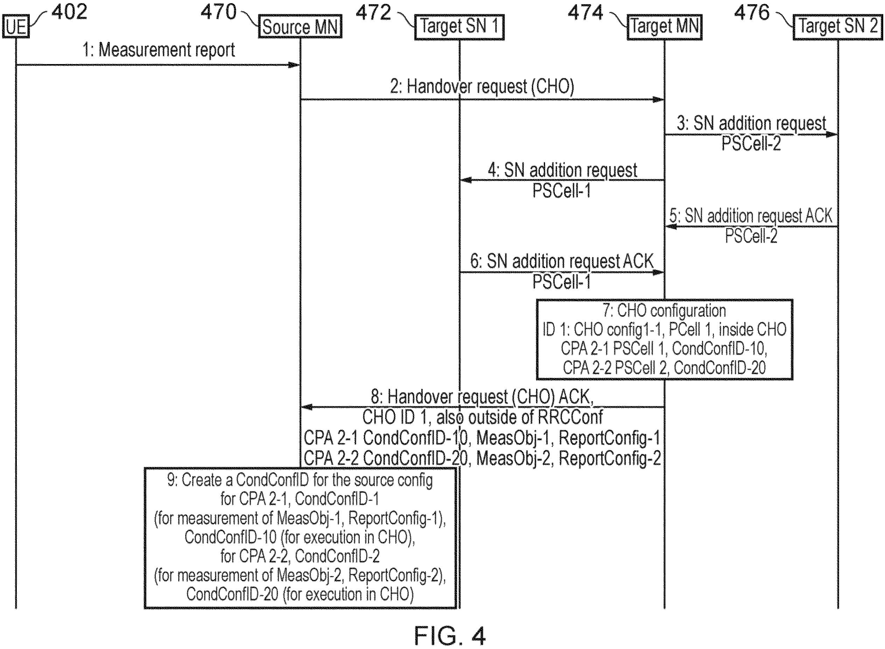

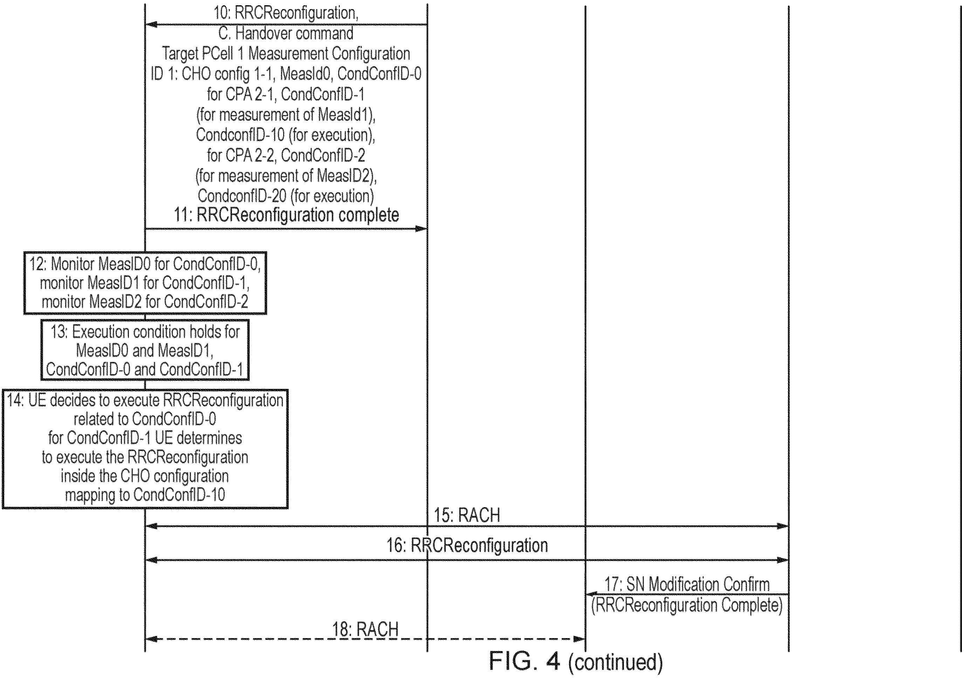

Reference is made to the signaling diagram of Figure 4 which shows communication between a UE 402, a source MN 470, a first target SN (target SN1) 472, a target MN 474 and a second target SN (target SN2) 476. The most salient steps are described below.

At S7, the CondConflD-10 and CondConflD-20 inside source configuration corresponding to CPA 2-1 and CPA 2-2 respectively are generated in step 7 inside CHO config by T-MN. CPA 2-1 may be associated with a CondConflD-1 inside target configuration and CPA 2-2 may associated with a CondConflD-2 inside target configuration, as explained above. In other words, a mapping of conditional configurations IDs in source configuration and conditional configurations IDs in target configuration is created or generated.

The CondConflD-10 and CondConflD-20 configured inside the CHO configuration are sent to the S-MN 470 outside of the RRCReconfiguration along with the indication of corresponding CPAs (CPA 2-1 and CPA 2-2), as shown at step 8.

As shown at step 9, in source configuration, for CPA 2-1 and CPA 2-2, CondConflD-1 and CondConflD-2 are created by mapping from CondConflD-10 and CondConflD-20 respectively at S-MN 470.

As shown at step 10, in some examples RRC Reconfig CHO command carries three conditional configurations (CondConfig): (i) CondConflD-0-> for CHO; (ii) CondConfID-1-> for CPA 2-1 (iii) CondConfID-2-> for CPA 2-2.

The UE 402 checks MeasID0, MeasID1 and MeasID2 corresponding to CondConflD-0, CondConfID-1, CondConfID-2, as shown at S12. In other words, the UE 402 compares actual measurements at the UE to threshold configurations.

Say, for example, execution condition holds (i.e. threshold values have been reached) for MeasID0 (CHO) & MeasID1 (CPA 2-1), as shown at S13.

Then, at S14 RRCReconfig corresponding to CondConfID-0 is performed directly or autonomously by the UE(CHO). For examples, for CPA 2-1 UE performs RRCReconfig inside CHO mapping to CondConfID-10.

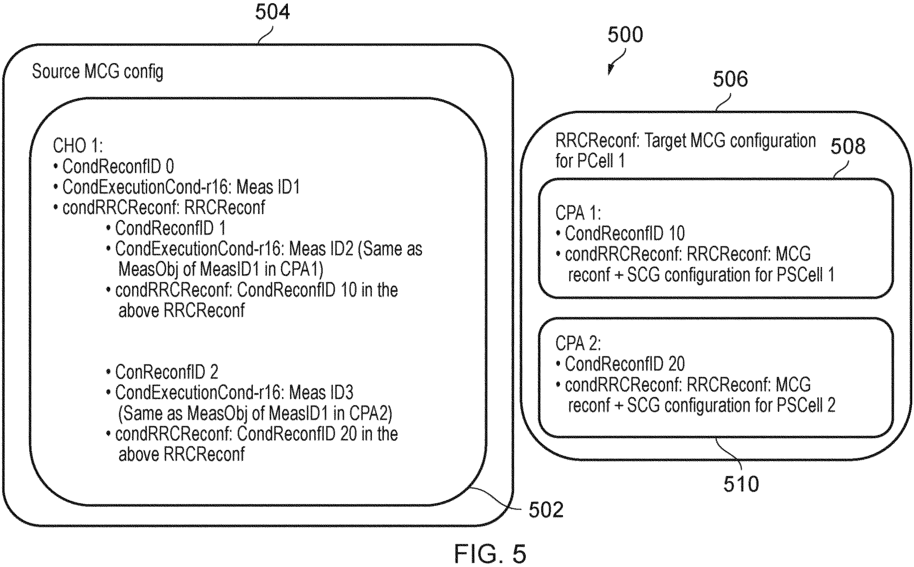

Figure 5 schematically shows a notation 500 (e.g. an ASN1) for Option 1. For example, the notation 500 shows the conditions for CHO 502 in a Source MCG config. 504. An RRCReconf:Target MCG configuration for a PCell1 is shown at 506, which in this example includes conditions for reconfiguration for CPA1 508 and CPA2 510.

It will be appreciated that in Option 1, the IE CondReconfigToAddModList-r16 (from TS 38.331) is enhanced in a nested manner to provide the indication to dependency on the CHO configuration and the execution condition.

In examples, the CHO configuration dependency is used to refer where the UE should look for an RRCReconfiguration to execute if the CPA condition is fulfilled.

In some examples, the execution condition dependency is used to wait for the CHO execution condition to be fulfilled if the CPA condition is fulfilled first.

In some examples, the additional configuration ID is used to bundle the measurement id with the RRCReconfiguration to execute. However, since in examples there is no RRCReconfiguration that can be executed right away or immediately by the UE, the conditional configuration Id inside the CHO configuration acts as a placeholder for the RRCReconfiguration to be executed by the UE. Once the CHO condition is fulfilled and the CPA condition is fulfilled, UE decodes the RRCReconfiguration related to the CHO. Inside or within this RRCReconfiguration the UE looks for a conditional RRCreconfiguration to be executed. For example, the conditional RRCreconfiguration may be indicated by the nested Conditional configuration ID, that acts as a pointer for the RRCReconfiguration. In some examples, the MeasID actually contains information about the physical cell identity and the frequencylnfoDL.

In one example, instead of the conditional configuration ID, the PSCell ID (corresponding to physical cell identity and the frequencylnfoDL) of the CPAs inside the CHO configuration can be indicated to the UE via a list. In examples, this list can be specific to a measurement object, ReportConfig and measurement ID. UE can use this mapping to determine which PSCell related to which measurement object and ReportConfig UE should execute once the CHO condition is fulfilled.

In another example, the measID inside the CHO configuration can be indicated to the UE . This ID can be used by the UE to determine which conditional configuration needs to be decoded by the UE. In some examples this requires that the target MN indicates a measID inside the conditional configuration as well.

It will be understood that Option 1 enables the UE to evaluate and execute a nested configuration without decoding the nested configuration before the execution thereof.

### Option 2

Option 2 proposes indicating a reporting configuration to the UE. In examples, the reporting configuration indicates to the UE a behavior that the UE should take related to a measurement object. In some examples, the behaviour may be referred to as an early evaluation behaviour. In some examples, the early evaluation behavior indicates that the UE should monitor a cell that refers to a SCG configuration of a cell to be executed if the CHO execution condition is fulfilled. In some examples of Option 2, the source node (source MN) indicates its support for early evaluation in HQ-REQ message to Target node (target MN).

In some examples, in order to notify the UE of CPAC condition to be evaluated, even after CHO condition is met, it is proposed to update the IE in *ReportConfigNR.* Two different examples for updated IE are proposed, which are discussed in-turn below and referred to as Example A and Example B.

### Example A

In Example A, a new IE is proposed. The proposed ReportConfigNR information element is shown below. The entries "EarlyEvaluationCHO" and "CHOExecutionConfig" are to be noted.

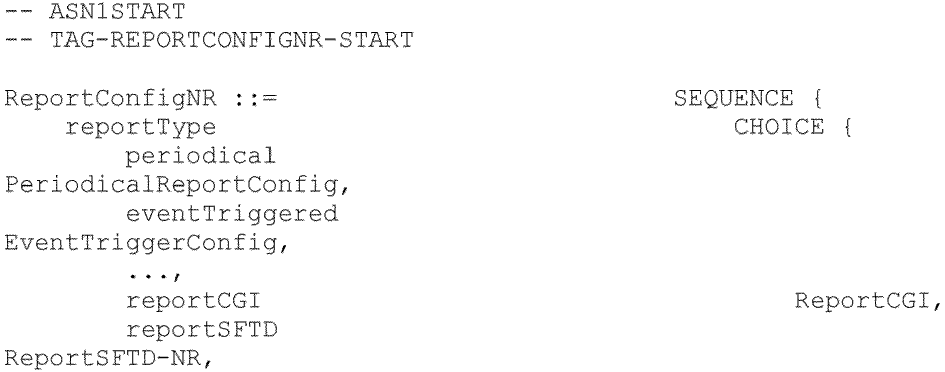

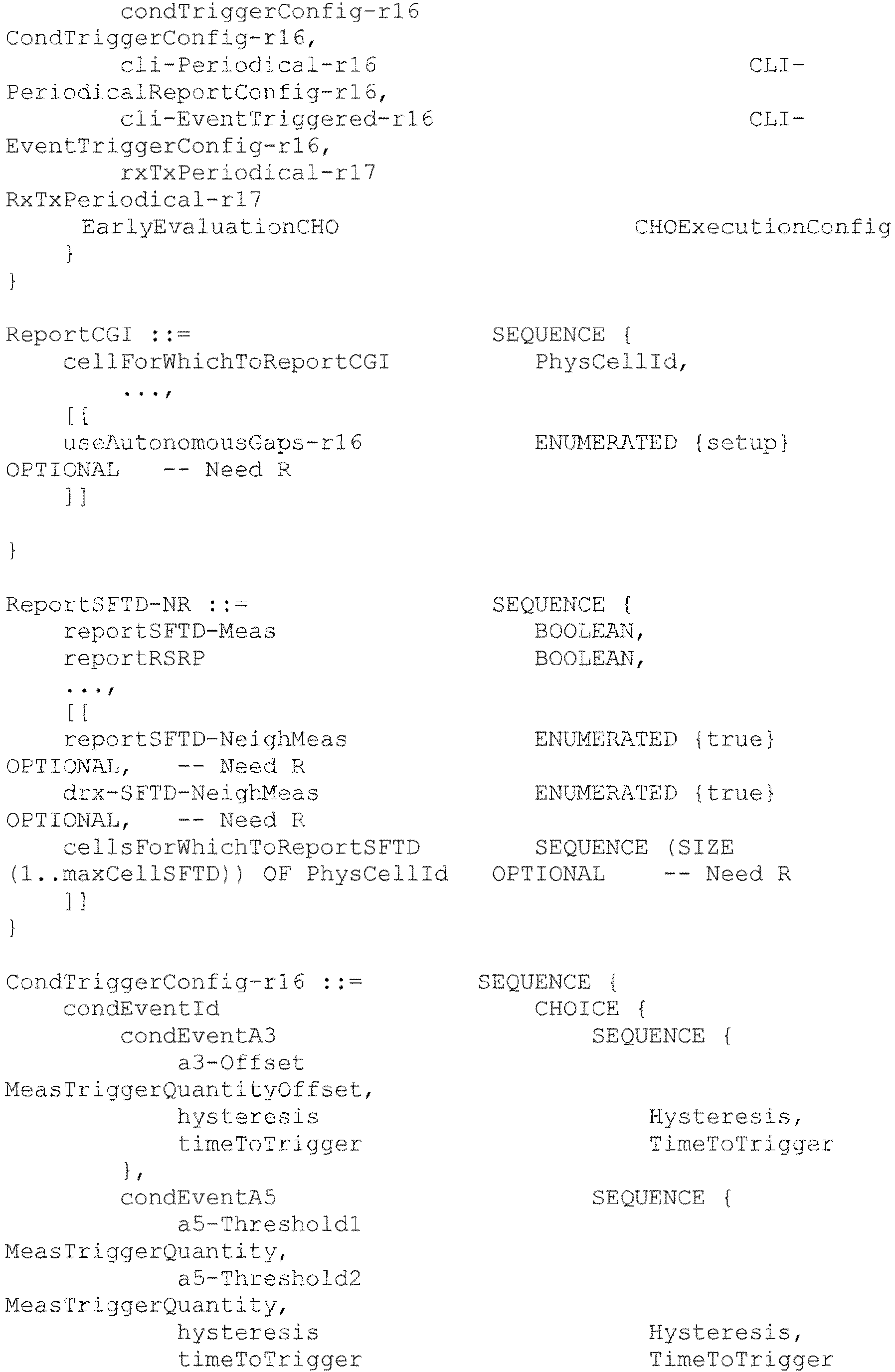

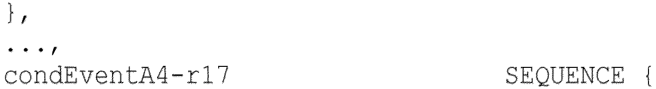

The "CHOExecutionConfig" IE informs the UE that once the CHO condition is met, the UE should wait and look for which target PSCell satisfies the CPA condition (if at all any such target PSCell exists), and subsequently the UE should execute CPA with such PSCell. In examples, the reportType of the newly proposed IE is EarlyEvaluationCHO, because in some examples such IE will only be triggered when the early CHO condition meetup event happens.

### Example B

Example B proposes a new flag in the ReportConfigNR. The proposed IE is shown below.

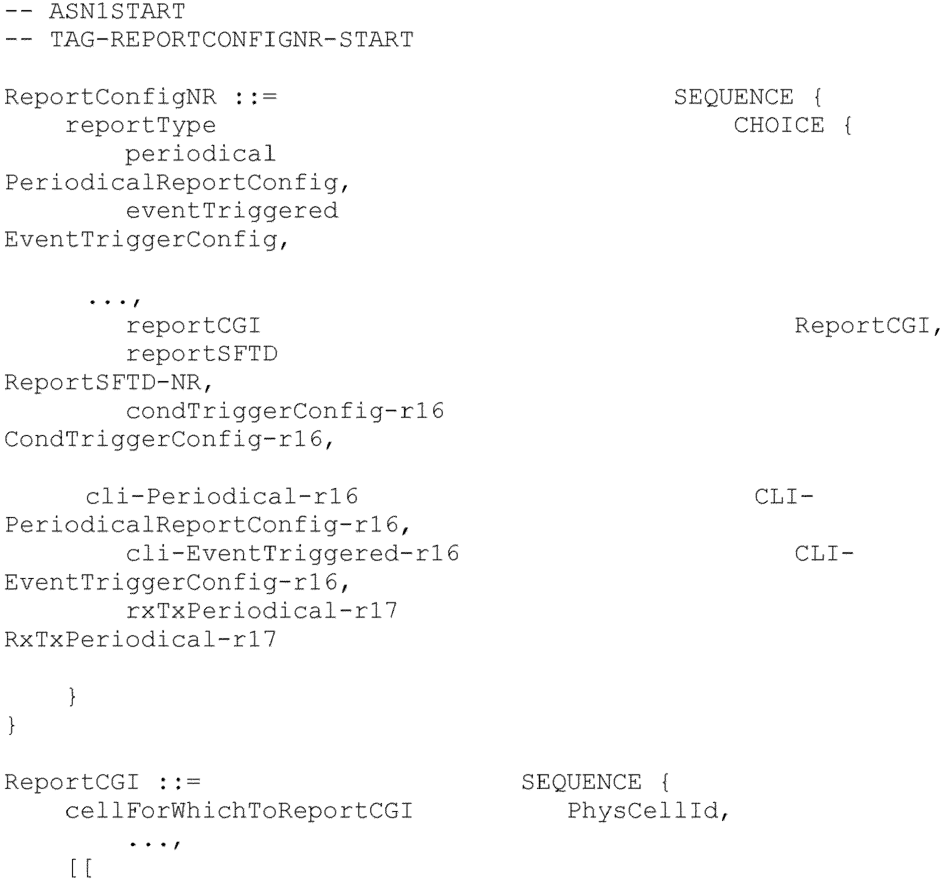

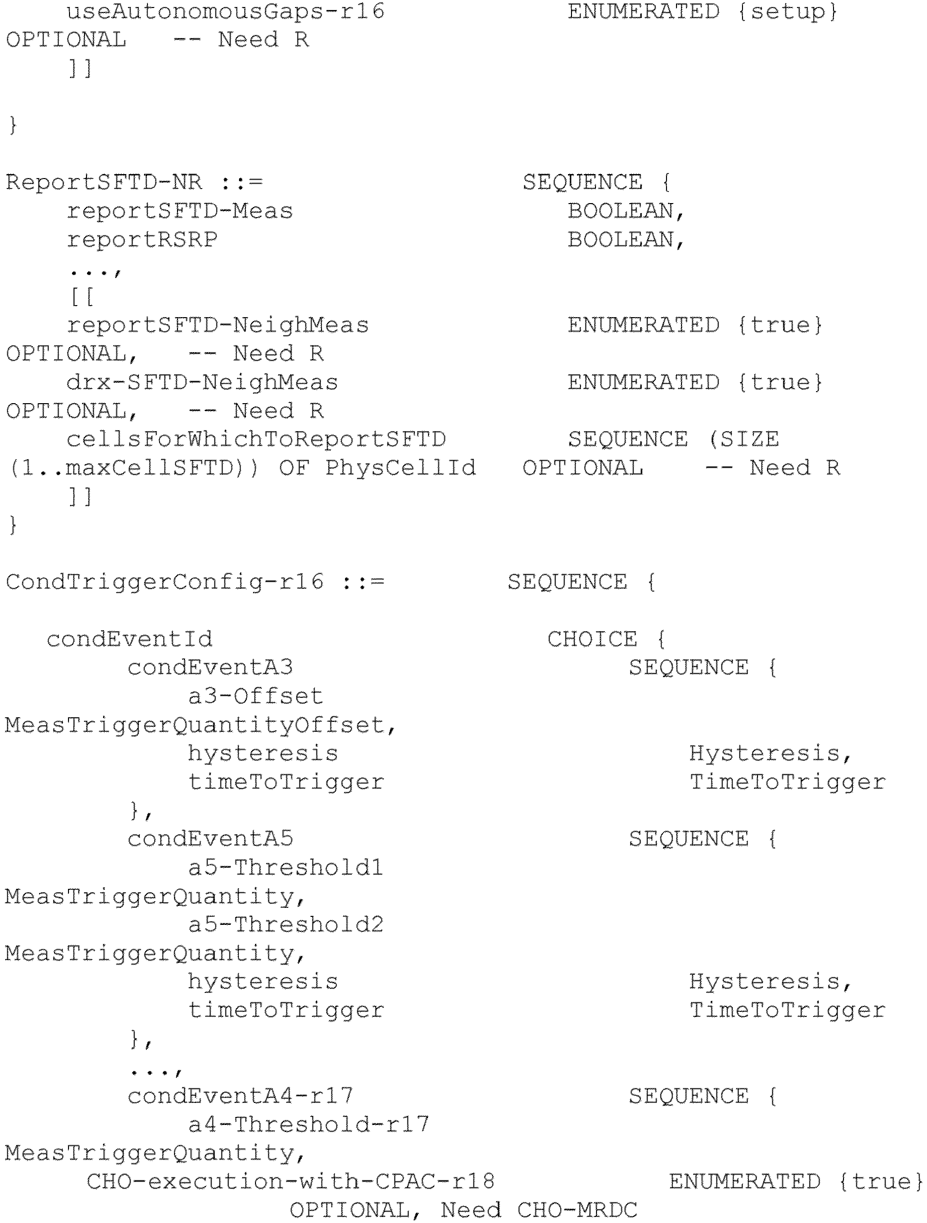

The new flag titled "CHO-execution-with-CPAC-r18" inside CondTriggerConfig-r16 is noted. The purpose of the flag is the same as the purpose of the proposed IE in Example A. That is, when the flag is on, the UE is informed that once the CHO condition is met, the UE should wait and look for which target PSCell satisfies the CPA condition (if at all any such target PSCell exists). Subsequently, the UE executes the CPA.

Option 2 enables the UE to know about a possible subsequent CPAC, while CHO condition is met, and therefore enables UE to wait and check for target PSCell which possibly can satisfy the CPAC conditions.

It will also be appreciated that in some examples, one or more elements of Option 1 and Option 2 can be combined.

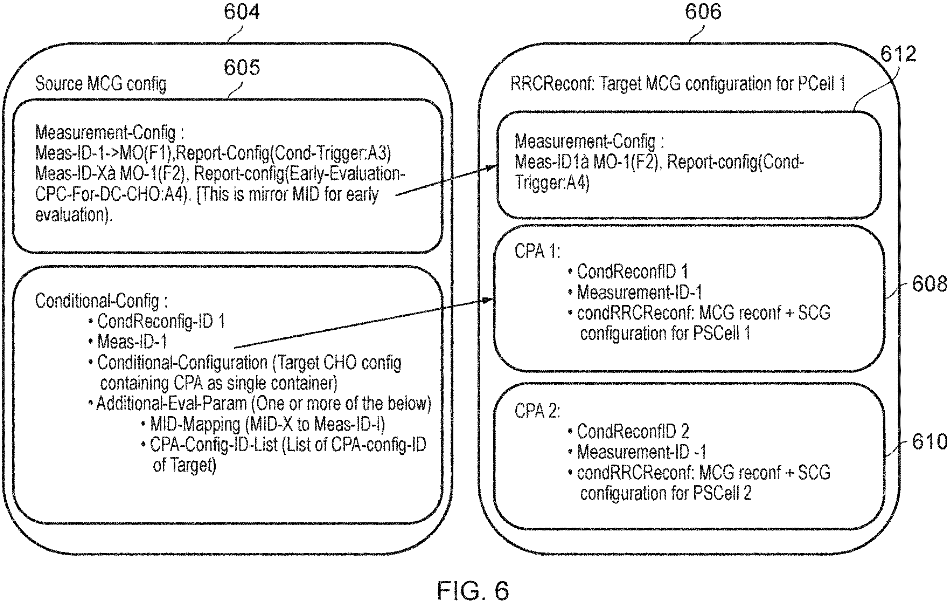

Figure 6 schematically shows an example where some elements of Option 1 and Option 2 are combined. It may be considered in some examples that Figure 6 shows an RRC Reconfiguration Mapping between source and target MCG RRC reconfiguration messages. An example Source MCG configuration is shown at 604, including a conditional-config 603 and a measurement config. 605. An example RRCReconf:Target MCG configuration for PCell1 is shown at 606, including a CPA1 608, a CPA2 610 and a measurement config. 612.

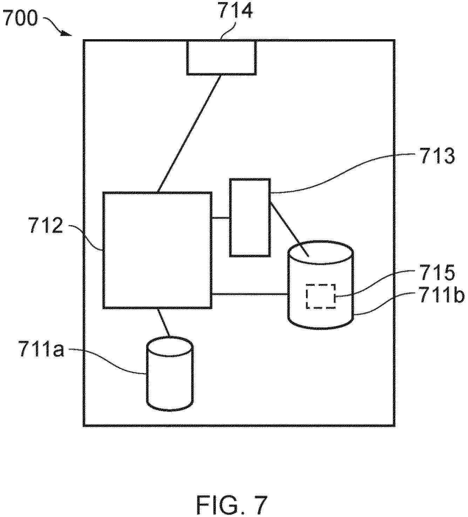

Figure 7 illustrates an example of a control apparatus 700 for controlling a function of the 5GRAN or the 5GC as illustrated on Figure 1. The control apparatus may comprise at least one random access memory (RAM) 711a, at least on read only memory (ROM) 711b, at least one processor 712, 713 and an input/output interface 714. The at least one processor 712, 713 may be coupled to the RAM 711a and the ROM 711b. The at least one processor 712, 713 may be configured to execute an appropriate software code 715. The software code 715 may for example allow performance of one or more steps to perform one or more of the present aspects. The software code 715 may be stored in the ROM 711b. The control apparatus 700 may be interconnected with another control apparatus 700 controlling another function of the 5GRAN or the 5GC. In some embodiments, each function of the 5GRAN or the 5GC comprises a control apparatus 700. In alternative embodiments, two or more functions of the 5GRAN or the 5GC may share a control apparatus.

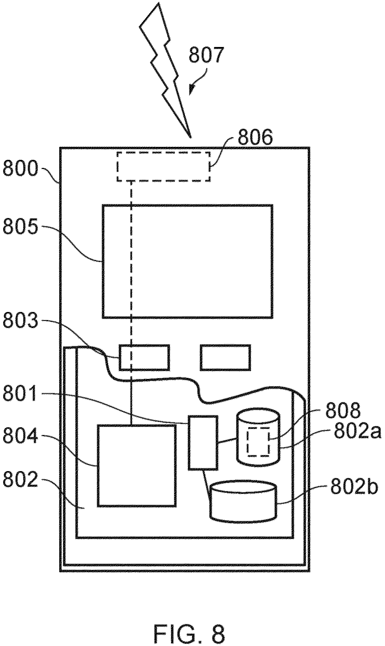

Figure 8 illustrates an example of a terminal 800, such as the terminal 102 illustrated in Figure 1. The terminal 800 may be provided by any device capable of sending and receiving radio signals. Non-limiting examples comprise a user equipment, a mobile station (MS) or mobile device such as a mobile phone or what is known as a 'smart phone', a computer provided with a wireless interface card or other wireless interface facility (e.g., USB dongle), a personal data assistant (PDA) or a tablet provided with wireless communication capabilities, a machine-type communications (MTC) device, an Internet of things (IoT) type communication device or any combinations of these or the like. The terminal Y00 may provide, for example, communication of data for carrying communications. The communications may be one or more of voice, electronic mail (email), text message, multimedia, data, machine data and so on.

The terminal 800 may be provided with at least one processor 801, at least one memory ROM 802a, at least one RAM 802b and other possible components 803 for use in software and hardware aided execution of tasks it is designed to perform, including control of access to and communications with access systems and other communication devices. The at least one processor 801 is coupled to the RAM 802b and the ROM 802a. The at least one processor 801 may be configured to execute an appropriate software code 808. The software code 808 may for example allow performance of one or more of the present aspects. The software code 808 may be stored in the ROM 802a.

The processor, storage and other relevant control apparatus can be provided on an appropriate circuit board and/or in chipsets. This feature is denoted by reference 804. The device may optionally have a user interface such as key pad 805, touch sensitive screen or pad, combinations thereof or the like. Optionally one or more of a display, a speaker and a microphone may be provided depending on the type of the device.

The terminal 800 may receive signals over an air or radio interface 807 via appropriate apparatus for receiving and may transmit signals via appropriate apparatus for transmitting radio signals. In Figure 8 transceiver apparatus is designated schematically by block 806. The transceiver apparatus 806 may be provided for example by means of a radio part and associated antenna arrangement. The antenna arrangement may be arranged internally or externally to the mobile device.

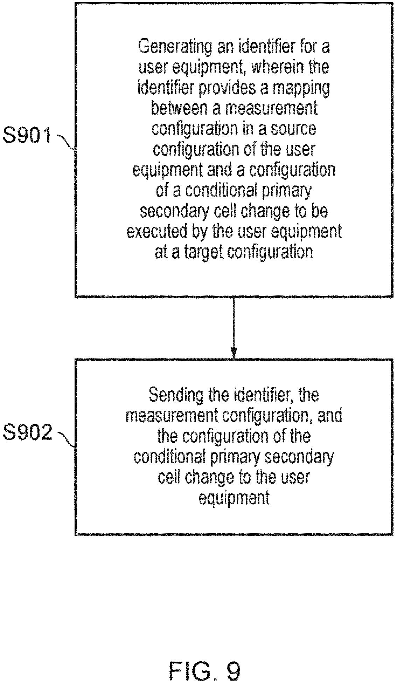

Figure 9 schematically shows a method according to an example. The flow chart of Figure 9 is viewed from the perspective of an apparatus. For example, the apparatus may comprise a source master node.

As shown at S901, the method comprises generating an identifier for a user equipment, wherein the identifier provides a mapping between a measurement configuration in a source configuration of the user equipment and a configuration of a conditional primary secondary cell change to be executed by the user equipment at a target configuration.

At S902, the method comprises sending the identifier, the measurement configuration, and the configuration of the conditional primary secondary cell change to the user equipment.

Figure 10 schematically shows a method according to an example. The flow chart of Figure 10 is viewed from the perspective of an apparatus. For example, the apparatus may comprise a user equipment.

As shown at S1001, the method comprises receiving an identifier, wherein the identifier provides a mapping between a measurement configuration in a source configuration of the apparatus and a configuration of a conditional primary secondary cell change to be executed by the apparatus at a target configuration.

At S1002, the method comprises using the identifier to determine one or more conditions of the conditional primary secondary cell change.

At S1003, the method comprises performing one or more cell measurements.

At S1004, the method comprises, when the one or more conditions of the conditional primary secondary cell change are met, executing the secondary cell change.

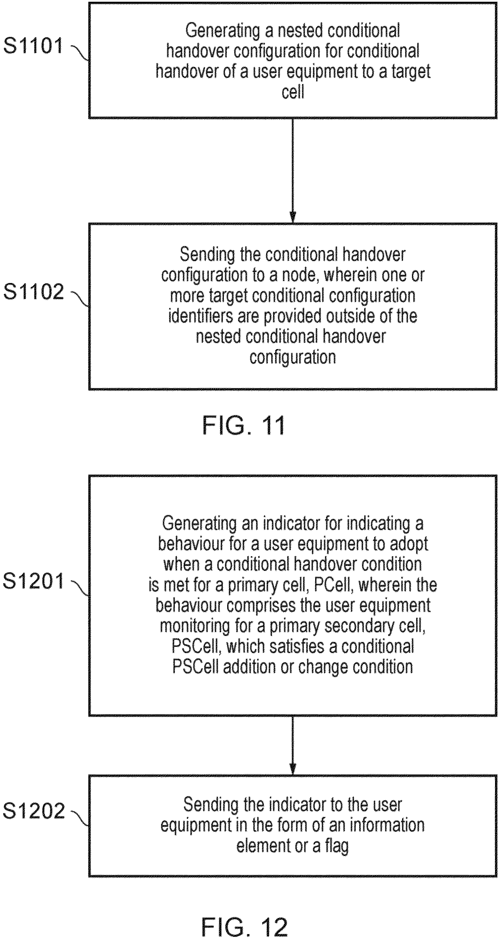

Figure 11 schematically shows a method according to an example. The flow chart of Figure 11 is viewed from the perspective of an apparatus. For example, the apparatus may comprise a target master node.

As shown at S1101, the method comprises generating a nested conditional handover configuration for conditional handover of a user equipment to a target cell.

At S1102, the method comprises sending the conditional handover configuration to a node, wherein one or more target conditional configuration identifiers are provided outside of the nested conditional handover configuration.

Figure 12 schematically shows a method according to an example. The flow chart of Figure 12 is viewed from the perspective of an apparatus. For example, the apparatus may comprise a source master node.

As shown at S1201, the method comprises generating an indicator for indicating a behaviour for a user equipment to adopt when a conditional handover condition is met for a primary cell, PCell, wherein the behaviour comprises the user equipment monitoring for a primary secondary cell, PSCell, which satisfies a conditional PSCell addition or change condition.

At S1202, the method comprises sending the indicator to the user equipment in the form of an information element or a flag.

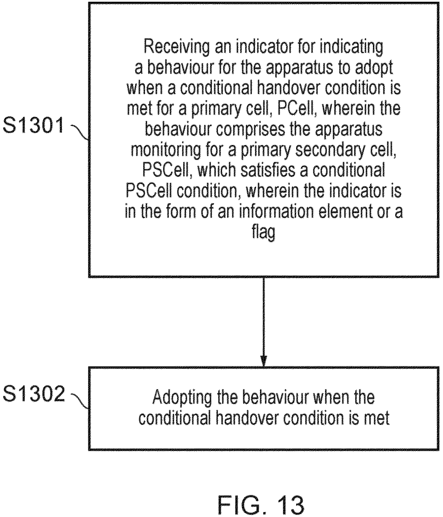

Figure 13 schematically shows a method according to an example. The flow chart of Figure 13 is viewed from the perspective of an apparatus. For example, the apparatus may comprise a user equipment.

As shown at S1301, the method comprises receiving an indicator for indicating a behaviour for the apparatus to adopt when a conditional handover condition is met for a primary cell, PCell, wherein the behaviour comprises the apparatus monitoring for a primary secondary cell, PSCell, which satisfies a conditional PSCell condition, wherein the indicator is in the form of an information element or a flag.

As shown at S1302, the method comprises adopting the behaviour when the conditional handover condition is met.

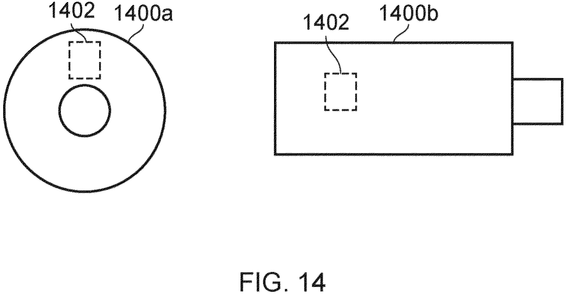

Figure 14 shows a schematic representation of non-volatile memory media 1400a (e.g. computer disc (CD) or digital versatile disc (DVD)) and 1400b (e.g. universal serial bus (USB) memory stick) storing instructions and/or parameters 1402 which when executed by a processor allow the processor to perform one or more of the steps of the methods of Figures 9 to 13.

It should be understood that the apparatuses may comprise or be coupled to other units or modules etc., such as radio parts or radio heads, used in or for transmission and/or reception. Although the apparatuses have been described as one entity, different modules and memory may be implemented in one or more physical or logical entities.

It is noted that whilst some embodiments have been described in relation to 5G networks, similar principles can be applied in relation to other networks and communication systems. Therefore, although certain embodiments were described above by way of example with reference to certain example architectures for wireless networks, technologies and standards, embodiments may be applied to any other suitable forms of communication systems than those illustrated and described herein.

It is also noted herein that while the above describes example embodiments, there are several variations and modifications which may be made to the disclosed solution without departing from the scope of the present invention.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

In general, the various embodiments may be implemented in hardware or special purpose circuitry, software, logic or any combination thereof. Some aspects of the disclosure may be implemented in hardware, while other aspects may be implemented in firmware or software which may be executed by a controller, microprocessor or other computing device, although the disclosure is not limited thereto. While various aspects of the disclosure may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

As used in this application, the term "circuitry" may refer to one or more or all of the following:
(a) hardware-only circuit implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and or processor(s), such as a microprocessor(s) or a portion of a microprocessor(s), that requires software (e.g., firmware) for operation, but the software may not be present when it is not needed for operation."

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

The embodiments of this disclosure may be implemented by computer software executable by a data processor of the mobile device, such as in the processor entity, or by hardware, or by a combination of software and hardware. Computer software or program, also called program product, including software routines, applets and/or macros, may be stored in any apparatus-readable data storage medium and they comprise program instructions to perform particular tasks. A computer program product may comprise one or more computer-executable components which, when the program is run, are configured to carry out embodiments. The one or more computer-executable components may be at least one software code or portions of it.

Further in this regard it should be noted that any blocks of the logic flow as in the Figures may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, CD. The physical media is a non-transitory media.

The term "non-transitory," as used herein, is a limitation of the medium itself (i.e., tangible, not a signal) as opposed to a limitation on data storage persistency (e.g., RAM vs. ROM).

The memory may be of any type suitable to the local technical environment and may be implemented using any suitable data storage technology, such as semiconductor based memory devices, magnetic memory devices and systems, optical memory devices and systems, fixed memory and removable memory. The data processors may be of any type suitable to the local technical environment, and may comprise one or more of general purpose computers, special purpose computers, microprocessors, digital signal processors (DSPs), application specific integrated circuits (ASIC), FPGA, gate level circuits and processors based on multi core processor architecture, as non-limiting examples.

Embodiments of the disclosure may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

The scope of protection sought for various embodiments of the disclosure is set out by the independent claims. The embodiments and features, if any, described in this specification that do not fall under the scope of the independent claims are to be interpreted as examples useful for understanding various embodiments of the disclosure.

The foregoing description has provided by way of non-limiting examples a full and informative description of the exemplary embodiment of this disclosure. However, various modifications and adaptations may become apparent to those skilled in the relevant arts in view of the foregoing description, when read in conjunction with the accompanying drawings and the appended claims. However, all such and similar modifications of the teachings of this disclosure will still fall within the scope of this invention as defined in the appended claims. Indeed, there is a further embodiment comprising a combination of one or more embodiments with any of the other embodiments previously discussed.

## Claims

1. An apparatus comprising:
means for generating an identifier for a user equipment, wherein the identifier provides a mapping between a measurement configuration in a source configuration of the user equipment and a configuration of a conditional primary secondary cell change to be executed by the user equipment at a target configuration; and
means for sending the identifier, the measurement configuration, and the configuration of the conditional primary secondary cell change to the user equipment.

2. An apparatus according to claim 1, wherein the measurement configuration in the source configuration comprises a measurement object, a measurement identifier, and a report configuration.

3. An apparatus according to claim 1 or claim 2, wherein the means for generating are configured to generate a further identifier that provides a mapping between a further measurement configuration in the source configuration of the user equipment and a further configuration of a further conditional primary secondary cell change, wherein the configuration of the conditional primary secondary cell change and the further configuration of the further conditional primary secondary cell change are conditional to execution of a conditional handover of a primary cell.

4. An apparatus according to any of claims 1 to 3, comprising means for receiving information for the configuration of a conditional primary secondary cell change from a target master node, wherein the means for generating are configured to generate the configuration of the conditional primary secondary cell change and the identifier on the basis of the received information.

5. An apparatus according to any of claims 1 to 4, wherein the information of the measurement configuration is received from the target node outside of a radio resource control configuration message.

6. An apparatus according to any of claims 1 to 5, wherein the apparatus comprises a source master node.

7. An apparatus comprising:
means for receiving an identifier, wherein the identifier provides a mapping between a measurement configuration in a source configuration of the apparatus and a configuration of a conditional primary secondary cell change to be executed by the apparatus at a target configuration;
means for using the identifier to determine one or more conditions of the conditional primary secondary cell change;
means for performing one or more cell measurements;
and means for, when the one or more conditions of the conditional primary secondary cell change are met, executing the secondary cell change.

8. An apparatus according to claim 7, wherein the measurement configuration in the source configuration comprises a measurement object, a measurement identifier, and a report configuration.

9. An apparatus according to claim 7 or claim 8, wherein the measurement configuration in the source configuration is related to at least one Conditional PSCell addition and/or change.

10. An apparatus according to any of claims 7 to 9, wherein the apparatus is configured to use the mapping in the source configuration to determine which target PSCell condition to decode for execution.

11. An apparatus according to any of claims 7 to 10, wherein the mapping associates a conditional configuration ID in the source configuration and conditional configuration ID in the target configuration.

12. An apparatus according to any of claims 7 to 11, wherein the mapping associates a measurement ID in the source configuration with a measurement ID in the target configuration.

13. An apparatus according to any one of claims 7 to 12, wherein the apparatus is configured to postpone decoding of the configuration of the conditional primary secondary cell change until the conditional primary secondary cell change is executed.

14. An apparatus according to any of claims 7 to 13, wherein the apparatus comprises a user equipment.

15. A method performed by an apparatus, the method comprising:
receiving an identifier, wherein the identifier provides a mapping between a measurement configuration in a source configuration of the apparatus and a configuration of a conditional primary secondary cell change to be executed by the apparatus at a target configuration;
using the identifier to determine one or more conditions of the conditional primary secondary cell change;
performing one or more cell measurements;
when the one or more conditions of the conditional primary secondary cell change are met, executing the secondary cell change.
